(19) Europäisches Patentamt

European Patent Office

Office européen des brevets

(11) EP 0 954 091 A1

(12) EUROPEAN PATENT APPLICATION

(43) Date of publication:
03.11.1999 Bulletin 1999/44

(51) Int. Cl.⁶: **H02P 9/48**, H02K 19/36,
H02M 7/5387

(21) Application number: 98830257.6

(22) Date of filing: 28.04.1998

(84) Designated Contracting States:
AT BE CH CY DE DK ES FI FR GB GR IE IT LI LU
MC NL PT SE
Designated Extension States:
AL LT LV MK RO SI

(71) Applicant: Brugnettini, Giovanni
47900 Rimini (RN) (IT)

(72) Inventor: Brugnettini, Giovanni
47900 Rimini (RN) (IT)

(74) Representative: Lanzoni, Luciano
c/o BUGNION S.p.A.
Via Cairoli, 107
47900 Rimini (Forli) (IT)

(54) **Compact mechanical-electrical transducer**

(57) Compact mechanical-electrical transducer (10), comprising a compact alternator (1), which absorbs variable mechanical energy from a drive shaft and provides in output an alternating voltage (VA) whose frequency is variable according to the number of revolutions of said shaft, in such a way as to power, with said alternating voltage (VA), an inverter (2) which in turn comprises a first rectification stage (21), and a second stage (22) for reconverting the direct voltage into alternating voltage, whose parameters can be programmed and set by the user.

Fig.1

**Description**

The present invention relates to a compact alternator driven by a variable mechanical energy source to provide in output an alternating voltage with correspondingly variable frequency.

As is well known, vehicles used to transport perishable goods within refrigerated cells mounted thereon already exist.

The characteristic requirements of such vehicles are mainly to allow the maximum payload and the maximum operating duration of the refrigerated cell. In order to meet the first requirement, and considering the limitations of such vehicles, which relate to their total weight under full load, it is necessary to minimise the tare of the vehicle, meant as the weight thereof and of all its refrigeration equipment, thereby increasing the payload at the same time.

In order to meet the second requirement, it is clearly necessary to find adequate means of refrigerating the cells so they have the best possible operating duration.

Currently, such cells are refrigerated, during the nightly work interruption, down to a temperature of about -40 °C, powered by mains voltage. In this way the cells act as iceboxes during the day and their operating duration is limited by lowering the temperature down to a certain limit, set out by the laws covering frozen products, such as perishable goods to be transported.

It is evident that, once the lower temperature limit is reached, the vehicle is forced to stop and draw from a mains outlet the energy needed to restore the proper temperature. It is equally evident that such a system, in order to allow a sufficient refrigeration duration, requires a considerable volume of cooling gas and hence a great weight of refrigerating equipment, thus impinging on the payload.

Given the above, the idea was pursued of reducing the weight of the refrigerating equipment, trying to cool the refrigerated cell with a corresponding compressor, also while the vehicle travels.

To solve this problem, the prior art entails the system consisting of the use of two compressors, one powered by mains voltage and the other one driven by a hydraulic motor fed by a hydraulic pump, itself driven by the engine of the vehicle.

This solution, though it does yield the advantage of an increase in operating duration, has low efficiency, in the order of 40%, and it presents further disadvantages due to the additional weight and cost of the second compressor and to added difficulties in driving the vehicle due to the absorption of energy on the part of the compressors, which at times is rather sudden.

A second solution exists which comprises a generating set that powers a single compressor. This solution, applied only to vehicles with a capacity exceeding 3.5 tons, is a better solution in terms of increasing the operating duration, but it too is expensive, heavy and polluting.

The technical problem set as the basis of the invention is therefore to conceive a device which is compact, but which is able to supply an amount of power compatible with the characteristics of a load such as refrigerated cells, starting from a variable mechanical energy source, such as the one that can be drawn from the engine of a vehicle.

Therefore its intent, starting for instance from a drive shaft with variable revolutions, is to provide electrical energy that is constant or variable according to the needs of the load.

Within the scope of this technical problem, in particular, also known are automobile alternators, extremely compact in themselves, which, drawing variable mechanical energy from a drive shaft of the vehicle, provide as an output an alternating voltage with variable frequency depending on the number of revolutions of the engine drive shaft.

However, such alternators output solely the 24 continuous Volts required for the electrical system of the vehicle. Therefore they cannot be used at all, such as they are, to meet the requirements listed above. If output powers and voltages are desired in the order of those of a mains outlet, industrial alternators are used, providing sufficient output voltage, at mains frequency, but having the disadvantage of being excessively bulky and heavy, running counter to the purposes of the invention. The subject invention is a compact mechanical-electrical transducer, which eliminates all the aforementioned drawbacks and, in particular, if used for the refrigerated cells of heavy vehicles, it allows the use of only one compressor with a single electric motor, it has decidedly modest weight and extremely compact size, it has high efficiency, roughly equal to 80%, and it allows a series of controls and functions on the output alternating voltage, according both to the available mechanical energy of the vehicle, and to load requirements.

Further, the motor of the compressor is designed to start and stop with gradual energy absorption, thereby allowing to drive the vehicle wholly independently from the energy absorbed by the refrigerating system and, lastly, its cost is lower than the aforementioned prior art systems.

The subject invention, as it is claimed, solves the technical problem briefly described above, and it attains all proposed objects, comprising as it does a simple mechanical - electrical transducer which is compact and includes the combination of an alternator with very limited weight and size, with an inverter which, after rectifying the electrical dimensions arriving from the alternator, allows to provide in output an alternating voltage whose parameters can be programmed and set directly by the user, acting on the controls of the inverter itself.

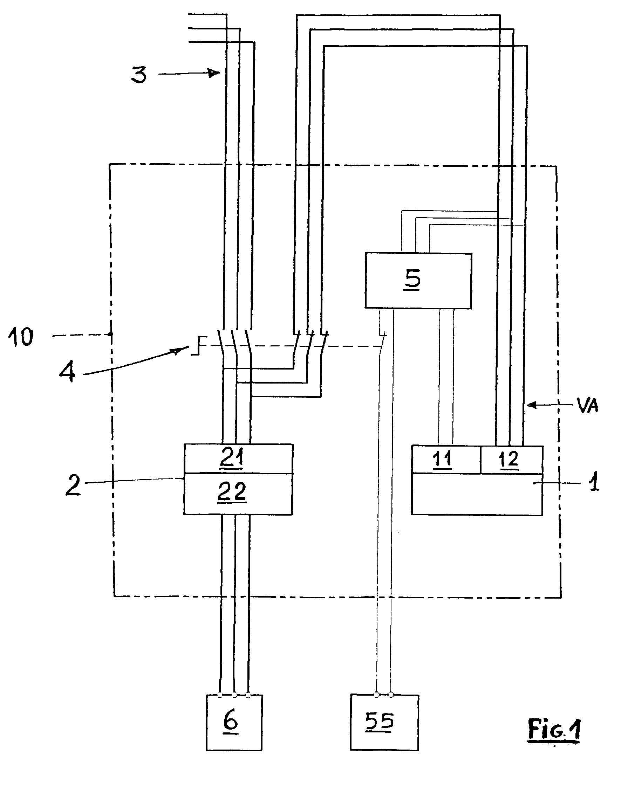

Additional characteristics and advantages shall become more readily apparent from the detailed description that follows, illustrated purely by way of non limiting example in the accompanying drawing (Figure 1), which shows the subject transducer in a functional block diagram.

With reference to the accompanying figure, the subject invention essentially comprises an alternator (1) and an inverter (2) originally combined together.

In particular and by way of example, the alternator (1) is of the compact type, of weight and size similar to those of automobile alternators, which draws variable mechanical energy for example from the engine drive shaft of the vehicle to output an alternating voltage (VA) whose frequency can vary according to the number of revolutions of the engine drive shaft.

If for instance the alternator (1) in use presented six pairs of poles and if the number of revolutions provided thereto by the vehicle engine varied from about 40 to 10,000 revolutions, it would emerge clearly that the output frequency would be variable from 40 to 1,000 Hz, using the well known formula:

$$f = p \cdot n / 60,$$

where p is the number of pairs of poles and n is the number of revolutions.

This compact alternator (1), however reduced its weight and size, must also output an alternating voltage (VA) of effective value of the same order of magnitude as the one that can be measured in mains outlets (roughly 400 Volts effective). To this end, the following actions were taken.

Consider the classic formula:

$$e = B \cdot l \cdot v,$$

where e is the electromotive force generated by the alternator, B is induction per square metre, l is the total length of the conductor that cuts the magnetic field generated by the alternator and v is the cutting velocity of the magnetic field itself.

If it is desired, advantageously, to maintain induction and velocity at the same design values as the compact alternators already commercially available, to increase electromotive force it would be sufficient to increase the length of the conductor. Therefore, in the case at hand, the stator winding for instance is suitably dimensioned, proportionately increasing the number of turns until reaching the transformation ratio that allows to generate the alternating voltage of the desired value.

An alternator of this kind further comprises a regulating circuit (5) which, constantly measuring the effective value of the alternating voltage (VA), if need be regulates the excitation current of the alternator when the voltage itself should vary with respect to a pre-set value which should remain essentially constant (about 460 Volts), which in any case shall never exceed the maximum voltage accepted by the inverter (2) positioned downstream.

More specifically, the alternator (1) being synchronous tri-phase, like the inverter (2), also tri-phase, the regulating circuit (5) acts on the inductor (11) of the alternator (1), which is preferably with rotating inductor with output on the armature (12), as Figure (1) clearly shows.

Thus at this point, at the output of the alternator, a voltage of about 460 Volts has become available, but with a frequency that on average is much higher than that of mains voltage (which has allowed to use a far more compact alternator).

However, it is necessary, according to the proposed objects, to provide electrical energy at mains power, but also possibly at mains frequency, if one desires to obtain, at the output, electrical energy corresponding to that of the mains itself.

To do so, the inverter (2) preventively rectifies completely and then transforms into direct voltage the alternating voltage at its input, regardless of its frequency, comprising a first rectification stage (21). It further comprises a second stage (22) for reconverting the direct voltage into alternating voltage, where the parameters thereof can in that case even be programmed and set directly by the user, acting on the controls of the inverter (2): it is of the type with programmable microprocessor.

With such inverter, therefore, it is possible to set the frequency (for example, 50 Hz), the value (for example, 400 Volts) of the output voltage, the relative power, as a function of the load and its requirements, as well as all other settings characteristic of inverters fitted with microprocessors.

Such inverter (2) also provides for its own feedback on the load (6), in order automatically to regulate, in the most appropriate manner, the quantity of energy to provide thereto.

If, for the same load, one wishes to make mains power supply alternative to that of the subject transducer (10), switching means (4) able to connect the inverter (2) to mains power supply (3) or to the alternator (1) are available.

In the case of the application of the subject transducer (10) to refrigerated cells of heavy vehicles, it is also provided for the electrical part (microprocessor) of the inverter (2) smoothly to regulate the energy absorption of the compressor, through a progressive action of starting or stopping the electric motor of the compressor itself.

The invention, though it was originated to reduce the problem of maintaining constant the temperature of the refrigerated cells of vehicles, can be applied on any vehicle that has the need to develop, during its travel, a source of electrical energy having the same characteristics as mains power supply. To this should be added the considerable flexibility in regulating electrical parameters by means of the inverter.

## Claims

1. Compact mechanical-electrical transducer, comprising a compact alternator (1) driven by a source of variable mechanical energy to provide at its output an alternating voltage with correspondingly variable frequency, characterised in that the compact alternator (1), structured in such a way as to provide, at its output, its own alternating voltage (VA) at variable frequency, but at an effective value in the order of the voltage provided directly by mains power supply (3), is combined with an inverter (2) positioned downstream and powered with said own alternating voltage (VA), said inverter (2) comprising a first rectification stage (21), able to transform said alternating voltage (21) into direct voltage, regardless of frequency, and a second stage (22) for reconverting the direct voltage into alternating voltage, whose parameters can be programmed and set directly by the user acting on the controls of the inverter (2).

2. Transducer according to claim 1, characterised in that the inverter (2) is powered by the alternator (1) upon agreement by switching means (4) able to connect, alternatively, the inverter (2) with mains power supply (3).

3. Transducer according to any of the previous claims, characterised in that it comprises a regulating circuit (5) which constantly measures the effective value of the alternating voltage (VA) and, if it varies, regulates the excitation current of the alternator (1) thereby maintaining such values essentially constant.

4. Transducer according to claim 3, characterised in that said regulating circuit (5) acts on the inductor (11) of the alternator (1).

5. Transducer according to any one of the previous claims, characterised in that the alternator (1) of the synchronous tri-phase type, as is the inverter (2), also tri-phase.

6. Transducer according to any one of the previous claims, characterised in that the inverter (2) is of the type with programmable microprocessor.

7. Transducer according to claim 6, characterised in that the inverter (2) provides for feedback on the load (6), in such a way as automatically to regulate the quantity of electrical energy to provide to the load (6) itself.

8. Transducer according to any one of the previous claims, applied to an electric motor, characterised in that it provides for starting and stopping the motor with gradual absorption of energy by means of the commands coming from said inverter (2).

9. Transducer according to any one of the previous claims, characterised in that the compact alternator (1) is structured in such a way as to present a number of turns, of its windings, such as to allow for said output alternating voltage (VA) to have effective value in the order of the one measurable in mains power supply.

Fig.1

European Patent
Office

**EUROPEAN SEARCH REPORT**

Application Number

EP 98 83 0257

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 95 20836 A (ONAN CORP) 3 August 1995 * page 5, line 2 - line 18 * | 1,3-7,9 | H02P9/48 H02K19/36 H02M7/5387 |
| Y | * page 10, line 6 - line 29 * * column 8, line 8 - line 11 * | 8 | |
| X | EP 0 515 329 A (BETHLEN DE BETHLEN MIKLOS ISTV) 25 November 1992 * abstract; figures 1,3 * | 1,2,9 | |
| X | US 4 975 824 A (HUSS JOHN ET AL) 4 December 1990 * figure 1 * | 1,5,9 | |
| X | US 5 581 168 A (ROZMAN GREGORY I ET AL) 3 December 1996 * column 1, line 17 - line 32; figure 1 * | 1,5,9 | |
| X | US 5 278 747 A (FALT JOHAN A M ET AL) 11 January 1994 | 1 | |
| A | * the whole document * | 7,8 | |
| X | US 5 175 439 A (HENNEBERGER GERHARD ET AL) 29 December 1992 * column 1, line 40 - line 50 * * column 3, line 22 - line 25 * * column 3, line 44 - line 46; figure 4 * | 1,9 | TECHNICAL FIELDS SEARCHED (Int.Cl.6) H02P H02K H02M |
| Y | EP 0 696 842 A (EBARA CORP ;EBARA DENSAN LTD (JP)) 14 February 1996 * column 2, line 36 - line 59 * | 8 | |
| A | ARNOLD P ET AL: "Spannungszwischenkreis Umrichter für höherfrequente Anwendungen", TECHNICA, 9 MAY 1990, SWITZERLAND, VOL. 39, NR. 9, PAGE(S) 17 - 21 , ISSN 0184-4067 XP002079402 * page 17, column 2 * * page 19; figure * | 1 | |

-/--

The present search report has been drawn up for all claims

| Place of search | Date of completion of the search | Examiner |
|---|---|---|
| THE HAGUE | 2 October 1998 | Bourbon, R |

**European Patent Office**

## EUROPEAN SEARCH REPORT

Application Number

EP 98 83 0257

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB 2 263 759 A (RANSON GORDON WILLIAM) 4 August 1993 * abstract * | 1 | |
| A | EP 0 099 108 A (HITACHI LTD) 25 January 1984 * figure 8 * | 1 | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 2 October 1998 | Bourbon, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)